# EUROPÄISCHE PATENTSCHRIFT

(11) **EP 1 678 428 B1**
(45) Veröffentlichungstag und Bekanntmachung des Hinweises auf die Patenterteilung: **30.12.2009**
(21) Anmeldenummer: 04786844.3
(22) Anmeldetag: 24.09.2004
(51) Int. Cl.: F16D 7/02, F16D 43/21

(54) **ÜBERLASTKUPPLUNGSVORRICHTUNG, KUPPLUNGSSCHEIBE**
OVERLOAD CLUTCH DEVICE, CLUTCH DISK
DISPOSITIF D'EMBRAYAGE DE SURCHARGE, DISQUE D'EMBRAYAGE

(30) Priorität: 17.10.2003 DE 10348398
(43) Veröffentlichungstag der Anmeldung: 12.07.2006
(73) Patentinhaber: ROBERT BOSCH GMBH, 70442 Stuttgart (DE)
(72) Erfinder: ROEHM, Heiko, 70176 Stuttgart (DE)
(74) Vertreter: Daub, Thomas
(86) Internationale Anmeldenummer: PCT/DE2004/002128
(87) Internationale Veröffentlichungsnummer: WO 2005/040627

(56) Entgegenhaltungen:
- WO-A-97/48915
- US-A- 2 757 523
- US-A- 2002 007 996

## Beschreibung

### Stand der Technik

Die Erfindung geht aus von einer Überlastkupplungsvorrichtung und einer Kupplungsscheibe sowie einem Kupplungsmittel nach den Oberbegriffen der unabhängigen Ansprüche 1 und 6 siehe US-A-2002/0007996.

Bei Elektrowerkzeugmaschinen mit Einsatzwerkzeugen mit definierten Schneiden, beispielsweise Handkreissägen, kann sich im Betrieb leicht ein schlagartiger Anstieg der Bearbeitungskraft einstellen. Es ist bekannt, für einen solchen Fall Überlastkupplungsvorrichtungen einzusetzen, welche beim Erreichen eines vorher eingestellten Drehmoments einen Kraftfluss vom Elektromotor zum Antrieb unterbrechen. Eine solche Überlastkupplungsvorrichtung ist beispielsweise eine Sicherheits-Überrastkupplung, wie sie im "Lexikon der Elektrowerkzeuge", 5. Auflage, 2001, Herausgeber Robert Bosch GmbH, Stuttgart, S. 232, beschrieben ist. Dort wirken ein Antriebszahnrad und federbestückte Kupplungswalzen als korrespondierende Kupplungsmittel zusammen. Das Antriebszahnrad, das z.B. eine Spindel antreibt, umgibt radial eine Antriebswelle. Am inneren Umfang des Antriebszahnrads sind Kupplungstaschen eingearbeitet, die durch Rasten getrennt sind und in denen die Kupplungswalzen laufen. Die Kupplungswalzen sind über Kupplungsfedern, die in Nuten der Antriebswelle hineinragen, mit der Antriebswelle verbunden. Die Antriebswelle dreht das Antriebszahnrad durch Mitnahme über die Kupplungswalzen. Blockiert die Spindel, steht als Folge das Antriebszahnrad und die Kupplungswalzen werden entgegen der Federkraft in die Nuten gedrückt, während die Antriebswelle weiterdreht. Beim Weiterdrehen können die Kupplungswalzen wieder in die nächste Kupplungstasche einrasten und das Antriebszahnrad wird wieder mitgenommen oder, falls die Spindel noch blockiert, werden die Kupplungswalzen wieder ausgerastet.

### Die Erfindung

Die Erfindung, siehe Anspruch 1, geht aus von einer Überlastkupplungsvorrichtung für eine Elektrowerkzeugmaschine mit einem Elektromotor, durch den ein Einsatzwerkzeug rotierend antreibbar ist, mit zwei korrespondierenden Kupplungsmitteln. Das erste Kupplungsmittel ist kraftabhängig auf einer Abtriebswelle befestigt. Die kraftabhängige Befestigung hat zur Folge, dass bei einem schlagartigen Anstieg der Bearbeitungskraft bzw. des Drehmoments über einen zulässigen Wert hinaus die Haftreibung, die das Kupplungsmittel auf der Abtriebswelle fixiert, in Gleitreibung übergeht und die Abtriebswelle sich gegenüber dem Kupplungsmittel drehen kann. Das Kupplungsmittel kann wegen seiner geometrischen Ausgestaltung verschleißarm betrieben werden.

Das Drehmoment, bei dessen Übersteigen die Überlastkupplungsvorrichtung auslöst, lässt sich gezielt über die Geometrie und die Werkstoffeigenschaften des Kupplungsmittels und der Abtriebswelle einstellen. Die Kupplungskraft ist unabhängig vom Bediener, so dass eine versehentlich falsche Einstellung der Kupplungskraft vermieden werden kann. Kraftspitzen, die etwa aus Spankräften resultieren, können durch das Kupplungsmittel zuverlässig von einem Getriebe und vom Bediener fern gehalten werden.

Das erste Kupplungsmittel ist nach der Erfindung als Rastscheibe ausgebildet.

Weiterhin ist die Rastscheibe mit einem Durchbruch ausgebildet. Daraus ergibt sich eine besonders verschleißarme Anordnung. Der C-förmige Querschnitt einer als Kupplungsmittel dienenden Kupplungsscheibe weist einen geringeren Verschleiß gegenüber einer ringförmigen Presspassung auf. Eine ausreichende radiale Breite des Ringsegments ist vorzusehen, die größer ist als die Dicke der Kupplungsscheibe in axialer Richtung, um von einer "Scheibe" sprechen zu können. Der Kraftbereich bzw. das Drehmoment, bei dem die Kupplungsscheibe von Haftreibung in Gleitreibung übergeht, ist relativ eng begrenzt und daher gut einstellbar. Ein an der Stirnfläche des zweiten Kupplungsmittels abstehender greift in den Durchbruch ein, um eine Wirkverbindung zwischen beiden und Kupplungsmitteln einzustellen und ein Drehmoment zu übertragen. Abhängig von dem Drehmoment kann über den Mitnehmer eine etwaige Presspassung des ersten Kupplungsmittels gelöst werden, so dass das erste Kupplungsmittel auf der Abtriebswelle durchrutschen kann.

Vorzugsweise macht der Durchbruch höchstens 25% des Umfangs aus. Damit kann eine zuverlässige Kraftübertragung erreicht werden.

Am äußeren Umfang ist nach der Erfindung eine Rastöffnung vorgesehen, so daß das Kupplungsmittel eine Rastscheibe für eine Spindelarretierung bildet. Die Funktion einer Rastscheibe kann damit platzsparend mit einer Kupplungsfunktion vereinigt werden.

Bevorzugt ist das zweite Kupplungsmittel als Zahnrad ausgebildet.

Ist das zweite Kupplungsmittel ein auf der Abtriebswelle angeordnetes Antriebszahnrad, können die beiden Kupplungsmittel miteinander in Wirkverbindung stehen.

Greift das Antriebszahnrad mit dem Mitnehmer in das erste Kupplungsmittel ein, kann im Blockierfall bzw. Überlastfall das Antriebszahnrad dieses aufweiten, so dass das erste Kupplungsmittel sich gegenüber der Abtriebswelle drehen kann. Das Antriebszahnrad kann die bevorzugte Kupplungsscheibe bei einer Drehbewegung mitnehmen, wenn kein Blockierfall vorliegt.

Blockiert das Einsatzwerkzeug bzw. steht die Abtriebswelle, löst die Überlastkupplungsvorrichtung aus und die Abtriebswelle kann sich relativ zu der Kupplungsscheibe drehen. Der Wirkmechanismus ist sehr einfach und unaufwendig auszuführen. Hat der Mitnehmer ein zuverlässiges Spiel in einem Durchbruch des Antriebszahnrads, wird ein Drehmoment, oberhalb dessen die Presspassung lösbar ist, u.a. über die Geometrie und die Werkstoffeigenschaften der Kupplungsscheibe und der Abtriebswelle bestimmt.

Ist bei blockierender Abtriebswelle und drehendem zweiten Kupplungsmittel das erste Kupplungsmittel auf der Abtriebswelle in Umfangsrichtung beweglich, kann ein Kraftfluss vom Elektromotor zum Antrieb zuverlässig unterbrochen werden.

Ist das zweite Kupplungsmittel mit Spielpassung auf der Abtriebswelle befestigt, kann durch ein axiales und radiales Spiel des Kupplungsmittels ein Getriebegeräusch reduziert werden, da das Kupplungsmittel axial und radial locker auf der Abtriebswelle sitzt und der Bedienkomfort entsprechend erhöht werden. Gleichzeitig ermöglicht die bevorzugte Kupplungsscheibe eine axiale Fixierung bzw. eine Spieleingrenzung des bevorzugten Antriebszahnrads auf der Abtriebswelle.

Besonders bevorzugt ist eine Elektrowerkzeugmaschine mit einer Überlastkupplungsvorrichtung, insbesondere eine Handkreissäge, eine Mauernutfräse, eine Marmorsäge und/oder ein Winkelschleifer. Die Erfindung ist besonders für Elektrowerkzeugmaschinen geeignet, welche mindestens eine Getriebestufe aufweisen. Die Erfindung kann besonders günstig in Elektrowerkzeugmaschinen eingesetzt werden, die eine Spindelarretierung für einen Werkzeugwechsel besitzen.

Die Erfindung betrifft auch ein Kupplungsmittel nach Anspruch 6.

### Zeichnung

Weitere Vorteile ergeben sich aus der folgenden Zeichnungsbeschreibung. In der Zeichnung ist ein Ausführungsbeispiel der Erfindung dargestellt.

Es zeigen:
Fig. 1 eine bevorzugte Elektrowerkzeugmaschine in Form einer Handkreissäge,
Fig. 2 eine räumliche Darstellung von Getriebekomponenten,
Fig. 3 einen Schnitt durch einen Getrieberaum einer Handkreissäge.

### Beschreibung des Ausführungsbeispiels

Gleiche oder sich entsprechende Teile werden in den Figuren grundsätzlich mit gleichen Bezugszeichen beziffert.

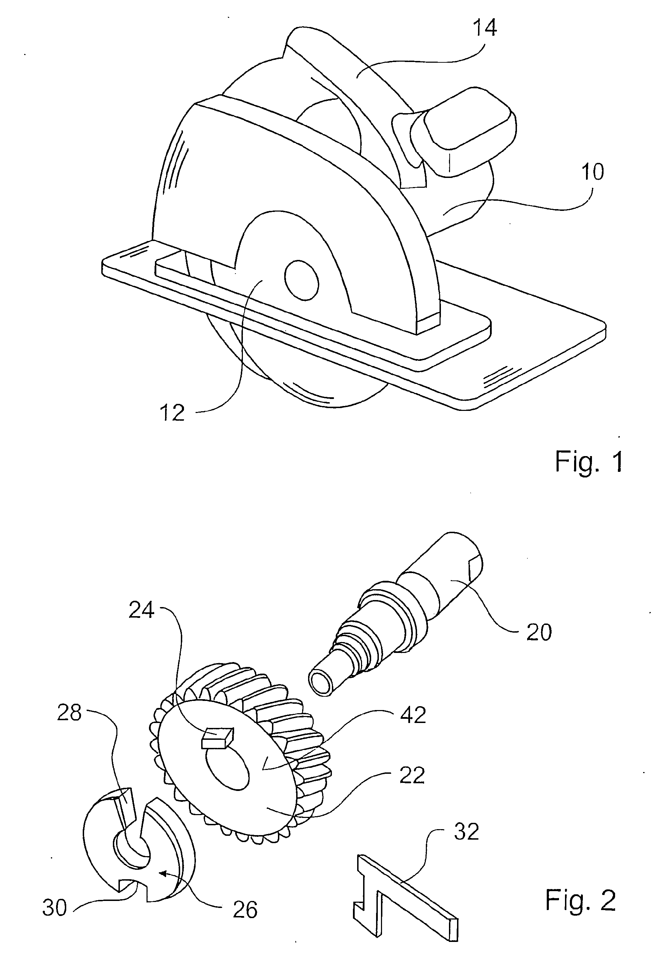

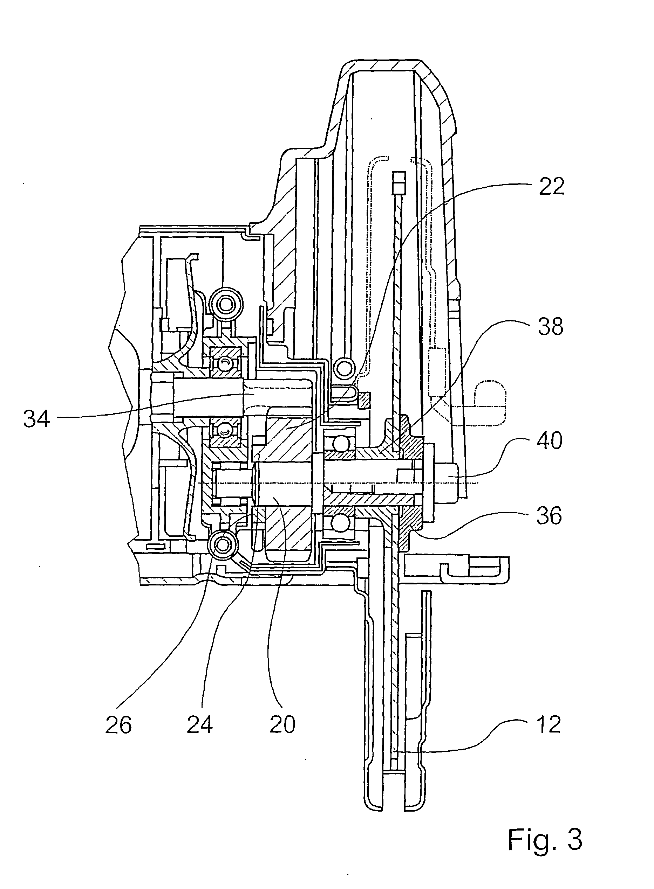

Fig. 1 zeigt eine bevorzugte Elektrowerkzeugmaschine in Gestalt einer Handkreissäge mit einer Überlastkupplungsvorrichtung. In einem Gehäuse 10 ist ein Elektromotor angeordnet, der ein Sägeblatt als Einsatzwerkzeug 12 rotierend antreibt. Die Elektrowerkzeugmaschine wird an einem Handgriff 14 gehalten. Der Kraftfluss vom Elektromotor zum Antrieb wird über ein Mittel 22 zur Übertragung der Motorbewegung auf ein kraftabhängig auf einer Abtriebswelle 20 befestigtes Kupplungsmittel 26 geleitet (Fig. 3).

Fig. 2 zeigt eine räumliche Darstellung von Getriebekomponenten mit einem ersten Kupplungsmittel 26 in Form einer Kupplungsscheibe und einem zweiten Kupplungsmittel 22 in Form eines Antriebszahnrads. Die Kupplungsscheibe 26 ist mit einer radialen Presspassung auf einer Abtriebswelle 20 befestigt. Das auf der Abtriebswelle 20 angeordnete Antriebszahnrad 22 steht in Wirkverbindung mit der Kupplungsscheibe 26. Das Antriebszahnrad 22 ist mit Spielpassung, also relativ lose, auf der Abtriebswelle 20 befestigt und daher radial und axial auf der Abtriebswelle 20 zumindest eingeschränkt beweglich. Die Kupplungsscheibe 26 sichert das Antriebszahnrad 22 in axialer Richtung.

Die Kupplungsscheibe 26 ist als C-förmiges Ringsegment mit einem Durchbruch 28 ausgebildet. Der Durchbruch 28 sichert das Antriebszahnrad 22 in radialer Richtung. Das Antriebszahnrad 22 greift mit einem Mitnehmer 24 in den Durchbruch 28 der Kupplungsscheibe 26 ein. Durch die C-förmige Gestalt der Kupplungsscheibe 26 kann bei blockierender Abtriebswelle 20 und drehendem Antriebszahnrad 22 der Mitnehmer 24 des Antriebszahnrads 22 die Kupplungsscheibe 26 elastisch aufweiten. Die Kupplungsscheibe 26 kann dann auf der sich drehenden Abtriebswelle 20 gleiten.

Die Kupplungsscheibe 26 ist als Rastscheibe ausgebildet und weist am äußeren Umfang mindestens eine Rastöffnung 30 auf, in die beispielsweise manuell eine Sperrklinke 32 eingeführt werden kann, um beispielsweise zum Werkzeugwechsel eine Spindel zu arretieren. Alternativ kann die Rastöffnung 30 auch von dem Durchbruch 28 gebildet werden, wenn der Mitnehmer 24 den Durchbruch 28 so füllt, dass die Sperrklinke 32 eingeführt werden kann.

Fig. 3 zeigt einen Schnitt durch einen Getrieberaum einer bevorzugten Handkreissäge. Ein mechanischer Strang ist durch einen Anker mit aufgeschnittenem Ritzel 34 gebildet, das ein als Stirnrad ausgebildetes Antriebszahnrad 22 antreibt, welches mittels Spielpassung auf einer Abtriebswelle 20 sitzt. Ein Mitnehmer 24 des Antriebszahnrads 22 ragt in einen Durchbruch 28 einer Kupplungsscheibe 26, die mittels Presspassung auf der Abtriebswelle 20 befestigt ist. Ein Einsatzwerkzeug 12 ist auf der Abtriebswelle 20 beispielsweise über Flansche 36, 38 mit einer Schraube 40 befestigt.

Die Kupplungsscheibe 26 besitzt am äußeren Umfang eine Rastöffnung 30 und im Körper einen Durchbruch 28, in welche eine Sperrklinke 32 eintauchen kann, um einen Sägeblattwechsel zu ermöglichen.

Die Presspassung zwischen Kupplungsscheibe 26 und Abtriebswelle 20 ist so dimensioniert, dass normale Arbeitsmomente beim Sägen über eine gesamte Motorkennlinie wie auch ein Motorblockiermoment übertragen werden können.

Treten Arbeitskräfte auf, die diesen Momentenbereich überschreiten, beispielsweise bei einem unbeabsichtigten Sägen in einen harten Gegenstand oder bei einem Rückschlag, wird über den Mitnehmer 24, der in den Durchbruch 28 der Kupplungsscheibe 26 ragt, die Kupplungsscheibe 26 elastisch etwas aufgebogen, was die Presspassung der Kupplungsscheibe 26 auf der Abtriebswelle 20 reduziert und ein Durchrutschen der Kupplungsscheibe 26 auf der Abtriebswelle 20 ermöglicht. Wenn die Arbeitskräfte wieder in den normalen Momentenbereich abfallen, greift die Presspassung wieder.

Vorzugsweise hat der Mitnehmer 24 in dem Durchbruch 28 ein zuverlässiges Spiel, so dass die Presspassung der Kupplungsscheibe 26 auf der Abtriebswelle 20 nur über die Abmessungen und Werkstoffeigenschaften der Kupplungsscheibe 26 und der Abtriebswelle 20 definiert wird.

### Bezugszeichen

- 10: Gehäuse
- 12: Einsatzwerkzeug
- 14: Handgriff
- 20: Abtriebswelle
- 22: Antriebszahnrad
- 24: Mitnehmer
- 26: Kupplungsscheibe
- 28: Durchbruch
- 30: Rastöffnung
- 32: Sperrklinke
- 34: Ritzel
- 36: Flansch
- 38: Flansch
- 40: Schraube
- 42: Stirnfläche

## Patentansprüche

1. Überlastkupplungsvorrichtung für eine Elektrowerkzeugmaschine mit einem Elektromotor, durch den ein Einsatzwerkzeug (12) rotierend antreibbar ist, mit einem ersten und einem zweiten korrespondierenden Kupplungsmittel (22, 26), wobei das erste Kupplungsmittel (26) kraftabhängig auf einer Abtriebswelle (20) befestigt ist, wobei das erste Kupplungsmittel (26) als Rastscheibe ausgebildet ist und wobei das zweite Kupplungsmittel (22) einen von einer Stirnfläche abstehenden Mitnehmer (24) aufweist, der zur Übertragung eines Drehmoments in einen Durchbruch (28) des ersten Kupplungsmittels (26) eingreift, **dadurch gekennzeichnet, dass** der Mitnehmer (24) das erste Kupplungsmittel (26) bei blockierender Abtriebswelle (20) elastisch aufweitet.

2. Überlastkupplungsvorrichtung nach Anspruch 1, **dadurch gekennzeichnet, dass** das erste Kupplungsmittel (26) durch eine mit einer radialen Presspassung auf der Abtriebswelle (20) befestigte Kupplungsscheibe gebildet ist.

3. Überlastkupplungsvorrichtung nach Anspruch 1 oder 2, **dadurch gekennzeichnet, dass** das zweite Kupplungsmittel (22) durch ein auf der Abtriebswelle (20) angeordnetes Antriebszahnrad gebildet ist.

4. Überlastkupplungsvorrichtung nach einem der vorhergehenden Ansprüche, **dadurch gekennzeichnet, dass** bei blockierender Abtriebswelle (20) und drehendem zweiten Kupplungsmittel (22) das erste Kupplungsmittel (26) auf der Abtriebswelle (20) in Umfangsrichtung beweglich ist.

5. Überlastkupplungsvorrichtung nach einem der vorhergehenden Ansprüche, **dadurch gekennzeichnet, dass** das zweite Kupplungsmittel (22) mit Spielpassung auf der Abtriebswelle (20) befestigt ist.

6. Kupplungsmittel für eine Überlastkupplungsvorrichtung nach einem der vorhergehenden Ansprüche, mit einer Ausbildung als Rastscheibe (26) mit einem als Ringsegment ausgebildeten Querschnitt mit einem Durchbruch (28), wobei am äußeren Umfang der Rastscheibe (26) mindestens eine Rastöffnung (30) vorgesehen ist, **dadurch gekennzeichnet, dass** die Rastscheibe (26) elastisch aufweitbar ist.

7. Kupplungsmittel nach Anspruch 6, **dadurch gekennzeichnet, dass** der Durchbruch (28) höchstens 25% des Umfangs ausmacht.

8. Elektrowerkzeugmaschine mit einer Überlastkupplungsvorrichtung nach einem der Ansprüche 1 bis 5.

## Claims

1. Overload clutch apparatus for an electric machine tool having an electric motor which can be used to drive an insert tool (12) in rotation, having a first and a second corresponding clutch means (22, 26), with the first clutch means (26) being secured on an output shaft (20) in a manner dependent on force, with the first clutch means (26) being in the form of a latching disc, and with the second clutch means (22) having a driver (24) which projects from one end face and engages in an aperture (28) in the first clutch means (26) for transmitting a torque, **characterized in that** the driver (24) elastically widens the first clutch means (26) when the output shaft (20) is locked.

2. Overload clutch apparatus according to Claim 1, **characterized in that** the first clutch means (26) is formed by a clutch disc which is secured to the output shaft (20) with a radial press fit.

3. Overload clutch apparatus according to Claim 1 or 2, **characterized in that** the second clutch means (22) is formed by a driving gear wheel which is arranged on the output shaft (20).

4. Overload clutch apparatus according to one of the preceding claims, **characterized in that** the first clutch means (26) can move in the circumferential direction on the output shaft (20) when the output shaft (20) is locked and the second clutch means (22) is rotating.

5. Overload clutch apparatus according to one of the preceding claims, **characterized in that** the second clutch means (22) is secured on the output shaft (20) with a loose fit.

6. Clutch means for an overload clutch apparatus according to one of the preceding claims, in the form of a latching disc (26) having a cross-section which is in the form of a segment of a ring and has an aperture (28), with at least one latching opening (30) being provided on the outer circumference of the latching disc (26), **characterized in that** the latching disc (26) can be elastically widened.

7. Clutch means according to Claim 6, **characterized in that** the aperture (28) makes up a maximum of 25% of the circumference.

8. Electric machine tool having an overload clutch apparatus according to one of Claims 1 to 5.

## Revendications

1. Dispositif d'embrayage de surcharge pour une machine-outil électrique avec un moteur électrique, qui permet d'entraîner en rotation un outil d'insertion (12), avec un premier moyen d'embrayage et un deuxième moyen d'embrayage correspondant (22, 26), le premier moyen d'embrayage (26) étant fixé en fonction de la force sur un arbre de sortie (20), le premier moyen d'embrayage (26) étant réalisé sous forme de disque d'encliquetage et le deuxième moyen d'embrayage (22) présentant un dispositif d'entraînement (24) saillant depuis une surface frontale, lequel vient en prise pour le transfert d'un couple dans un orifice (28) du premier moyen d'embrayage (26), **caractérisé en ce que** le dispositif d'entraînement (24) élargit le premier moyen d'embrayage (26) élastiquement lorsque l'arbre de sortie (20) est bloquant.

2. Dispositif d'embrayage de surcharge selon la revendication 1, **caractérisé en ce que** le premier moyen d'embrayage (26) est formé par un disque d'embrayage fixé avec un ajustement serré radial sur l'arbre de sortie (20).

3. Dispositif d'embrayage de surcharge selon la revendication 1 ou 2, **caractérisé en ce que** le deuxième moyen d'embrayage (22) est formé par une roue dentée d'entraînement disposée sur l'arbre de sortie (20).

4. Dispositif d'embrayage de surcharge selon l'une quelconque des revendications précédentes, **caractérisé en ce que** lorsque l'arbre de sortie (20) est bloquant et que le deuxième moyen d'embrayage (22) tourne, le premier moyen d'embrayage (26) est déplaçable dans la direction périphérique sur l'arbre de sortie (20).

5. Dispositif d'embrayage de surcharge selon l'une quelconque des revendications précédentes, **caractérisé en ce que** le deuxième moyen d'embrayage (22) est fixé avec un ajustement avec jeu sur l'arbre de sortie (20).

6. Moyen d'embrayage pour un dispositif d'embrayage de surcharge selon l'une quelconque des revendications précédentes, comprenant une réalisation sous forme de disque d'encliquetage (26) avec une section transversale réalisée sous forme de segment annulaire avec un orifice (28), au moins une ouverture d'encliquetage (30) étant prévue sur la périphérie extérieure du disque d'encliquetage (26), **caractérisé en ce que** le disque d'encliquetage (26) peut être élargi élastiquement.

7. Moyen d'embrayage selon la revendication 6, **caractérisé en ce que** l'orifice (28) représente au maximum 25% de la périphérie.

8. Machine-outil électrique comprenant un dispositif d'embrayage de surcharge selon l'une quelconque des revendications 1 à 5.
